Europäisches Patentamt

European Patent Office

Office européen des brevets

(11) Publication number: **0 234 274 B1**

## EUROPEAN PATENT SPECIFICATION

(45) Date of publication of patent specification: **22.04.92**  (51) Int. Cl.5: **H01L 41/08**

(21) Application number: **87100804.1**

(22) Date of filing: **21.01.87**

(54) **A linear actuator.**

(30) Priority: **21.01.86 JP 11509/86**

(43) Date of publication of application:
**02.09.87 Bulletin 87/36**

(45) Publication of the grant of the patent:
**22.04.92 Bulletin 92/17**

(84) Designated Contracting States:
**DE FR GB**

(56) References cited:
**EP-A- 0 155 694**

(73) Proprietor: **DAINIPPON SCREEN MFG., CO., LTD.**
**1-1, Tenjinkitacho**
**Horikawadoriteranouchiagaru-4-chome**
**Kamikyo-ku Kyoto-shi Kyoto-fu(JP)**

(72) Inventor: **Ueyama, Tsutomu**
**67-18 Yawatatsukiyoda Yawatashi**
**Kyoto(JP)**

(74) Representative: **Goddar, Heinz J., Dr. et al**
**FORRESTER & BOEHMERT Franz-Joseph-Strasse 38**
**W-8000 München 40(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

# Description

THIS INVENTION relates to a linear actuator adapted to be used, for example, for accurate positioning of an object, and particularly to a linear actuator wherein the deformations of a plurality of electrostrictive elements are output as a linear movement of an output shaft.

A known linear actuator is disclosed in Japanese Provisional Patent Publication No. 59 (1984)-99977. As shown in Figure 11 of the accompanying drawings, the known linear actuator comprises ring-shaped elements 42, 42 fixed at a desired spacing within a casing body 43 and each composed of two annular electrostrictive elements 41, 41 fixed together in opposite directions to each other. A cylindrical clamping element 44, disposed within the interior circumference of the respective ring-shaped element 42, is composed of electrostrictive material which is extensible and contractible radially. An output shaft 45 extends through the clamping elements 44 so as to be reciprocally movable axially by controlling voltages applied to the ring-shaped elements 42 and the clamp elements 44.

This kind of linear actuator is simple in construction, can be small in size and is able to attain an ultradecelerated driving force without any requirement for reduction gears. Furthermore, since it does not have a magnetic coil, such as a solenoid, it is useful as a linear actuator in an ultra-accurate positioning mechanism or the like which is unaffected by a magnetic field.

However, since the above-mentioned prior linear actuator is constructed so as to reciprocate the output shaft by repeating intermittent movements of the clamp elements 44 when taking a microscopic view thereof, it is difficult to obtain a smooth output.

Accordingly, when a smooth output is desired, multiple clamp elements must be disposed along the output shaft. But this is disadvantageous from the manufacturing point of view because the resulting construction is complicated and both the setup and the adjustment between the clamp elements and the output shaft are made difficult.

The present invention aims to solve the problems noted above, and enables the provision of a linear actuator the output shaft of which can be moved reciprocally smoothly at an ultradecelerated speed without the repetition of intermittent movements as described in the above-mentioned prior art.

Accordingly, the invention provides a linear actuator comprising a casing body, characterized by a planetary driving unit adapted to be driven by a plurality of electrostrictive elements in the casing body, a precessional driving unit adapted to be driven by a plurality of electrostrictive elements therein, a contact ring connected interlockingly to both the planetary driving unit and the precessional driving unit therein and a shaft loosely engaged with the interior surface of the contact ring and supported for reciprocating movement by the casing body, in which actuator the voltages applied to the electrostrictive elements are controlled so that the contact ring is driven to perform a planetary movement whilst being driven into contact with the shaft by the planetary driving unit and is driven to perform a precessional movement by the precessional driving unit, so that the contact point between the interior surface of the contact ring and the shaft performs a relative movement describing a spiral path owing to the planetary movement and the precessional movement of the contact ring.

The planetary driving unit of an actuator embodying the invention includes a plurality of electrostrictive elements connected to the exterior periphery of the contact ring and drives the contact ring to perform a planetary movement around the output shaft by controlling the phase of the voltage applied to the respective electrostrictive element. That is, the contact ring is adapted to revolve around the output shaft with the interior surface thereof being kept pressed onto the output shaft and also with shifting the contact paint therebetween.

On the other hand, the precessional driving unit includes a plurality of electrostrictive elements connected to the contact ring and drives the contact ring to perform the precessional movement at a precessional angle $\theta$ around the output shaft by controlling the phase of the respective electrostrictive element, for example so as to advance the phase by $\pi/2$ relative to that of the planetary driving unit. That is, the contact ring is adapted to roll over around the exterior surface of the output shaft with the contact point describing a spiral path at the precessional angle $\theta$ by means of the movement incorporated with the planetary movement and the precessional movement. Therefore, the linear actuator moves the output shaft thereof smoothly in reciprocation.

Consequently, with an actuator embodying the present invention a smooth output can be attained because the contact ring moves smoothly while describing a spiral path around the output shaft. Moreover, since the contact ring and the output shaft are constructed so as to move relatively whilst maintaining the rolling contact therebetween, the setup and the adjustment thereof can be made easily without any difficulties.

In order that the invention may be readily understood, embodiments thereof will now be described, by way of example, with reference to the accompanying drawings, in which:

Figure 1 is a longitudinal sectional view of one embodiment of a linear actuator according to the present invention;

Figure 2 is a fragmentary sectional view on line II-II in Figure 1 showing the relationship between an output shaft and a contact ring in the linear actuator;

Figure 3 is a fragmentary sectional view on line III-III in Figure 1 showing the relationship between the output shaft and a cylindrical member;

Figures 4 and 5 are views showing waveforms of applied voltages for a planetary driving unit and a precessional driving unit respectively;

Figure 6 is a perspective view showing the relationship between the output shaft, the contact ring and the cylindrical member;

Figure 7 (a) is a side view of Figure 6;

Figure 7 (b) is a plan view of Figure 6;

Figure 8 is a sectional front view showing the planetary driving unit and the precessional driving unit as seen in the direction of the arrows of section lines II-II and III-III;

Figure 9 is a schematic explanatory view of the linear actuator;

Figure 10 is a longitudinal sectional side view showing another embodiment of the present invention; and

Figure 11 is a longitudinal sectional side view showing a prior art linear actuator disclosed in Japanese Patent Publication No. 59 (1984)-99977.

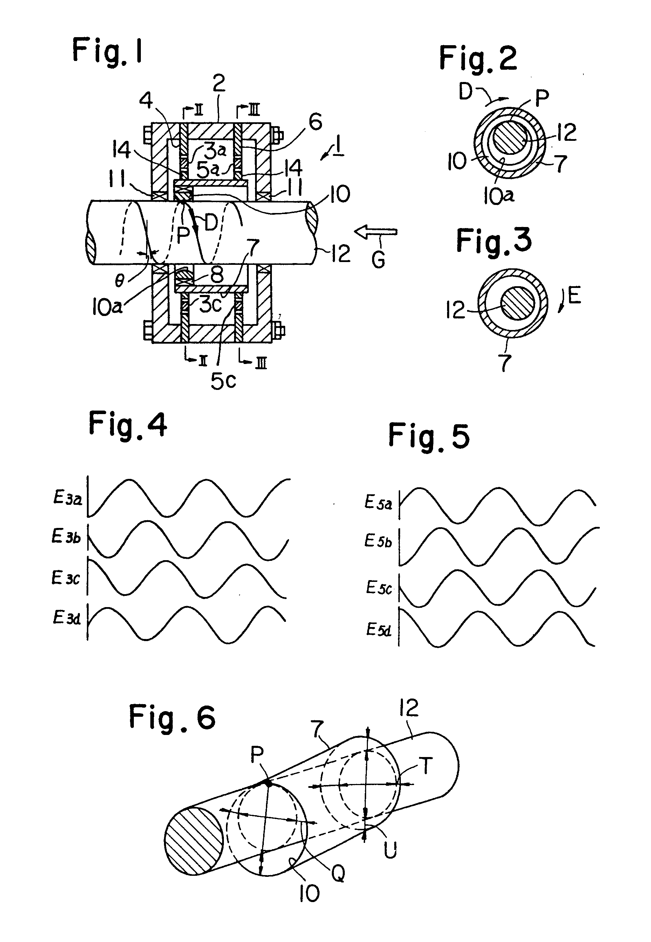

Figures 1 to 9 illustrate one embodiment of the present invention. As shown in Figure 1, a linear actuator 1 comprises a planetary driving unit 4 adapted to be driven by a plurality of electrostrictive elements 3a-3d within a casing body 2, a precessional driving unit 6 adapted to be driven by a plurality of electrostrictive elements 5a-5d, a contact ring 10 rotatably supported by a bearing 8 within a cylindrical member 7 which is connected interlockingly to both the planetary driving unit 4 and the precessional driving unit 6, and an output shaft 12 fitted loosely into the contact ring with a small gap therebetween and supported for reciprocation through linear bearings II, II by the casing body 2.

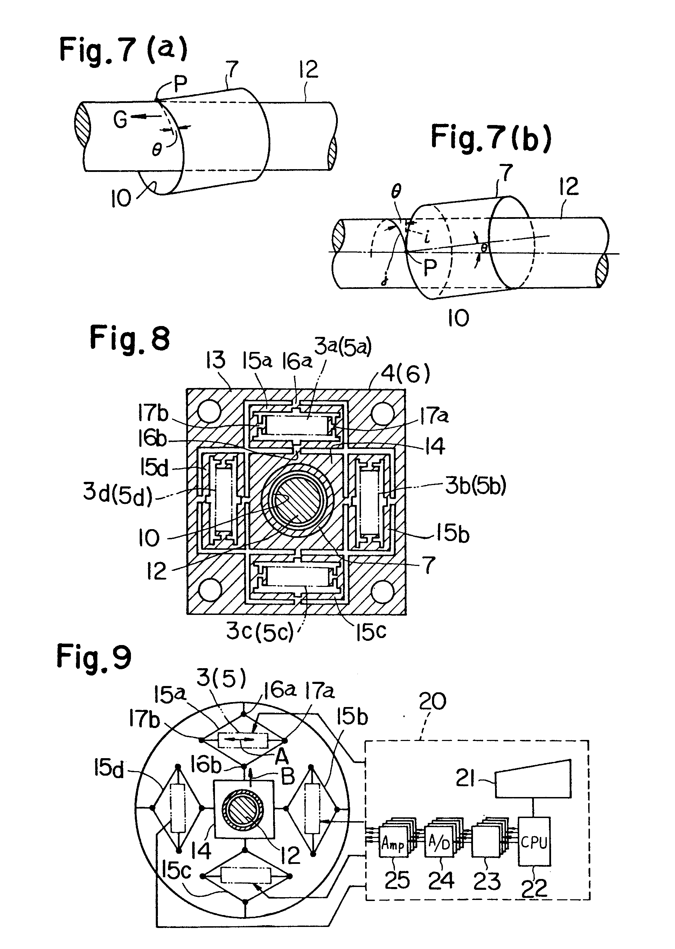

As shown in Figure 8 the planetary driving unit 4 is integrally formed from an elastic metal plate and comprises a peripheral attaching portion 13 adapted to be fixed to the casing body 2, a central connecting portion 14 fixedly fitted around the cylindrical member 7 and four sets of strain variation magnifying portions 15 (15a - 15d) connected to both the peripheral attaching portion 13 and the central connecting portion 14 and incorporating electrostrictive elements 3a - 3d which are equally spaced apart around the output shaft 12. The precessional driving unit 6 is also formed of an elastic metal plate of the same construction as shown in Figure 8.

The strain variation magnifying portion 15 is constructed so as to form a four-directional magnification link mechanism as shown schematically in Figure 9. The opposite end portions 16a, 16b on the short axis of the four directional magnification link mecahnism 15 are connected to the attaching portion 13 and to the connecting portion 14 respectively, and the opposite end portions 17a, 17b on the long axis thereof are connected to the opposed ends of the electrostrictive elements 3a - 3d or (5a -5d). Since the four-directional magnification link mechanism 15 is formed integrally from an elastic metal plate as described above, it is capable of deforming and restoring to the original state at its connecting portions 16a, 16b, 17a, 17b. Therefore, when a controlled voltage is applied to the electrostrictive element 3 or 5 by a control circuit described hereinafter to extend the element 3 or 5 in the direction of arrow A, the central connecting portion 14 connected thereto is pulled in the direction of arrow B with its strain variation being magnified several times. Thereupon, since the displacement in the direction of arrow B is proportional to ratio of the long axis to the short axis, the strain variation of the electrostrictive element 3 or 5 is magnified.

The electrostrictive element 3 or 5 (for example, the "stacked piezoelectric actuator element" made by Nippon Electrictiy Co., Ltd.) comprises a piezo-stack which is constructed by stacking and combining many piezoelectric members in the extensional direction thereof. For example, an element having a length of 9 mm is extended by about 7.5 $\mu$ by an applied voltage of 150 V and outputs a driving force of about 20 KgW.

The control circuit 20 (Figure 9) is used to control voltages E3a - E3d and E5a - E5d applied to the electrostrictive elements 3a - 3d and 5a - 5d as shown in Figure 4 and Figure 5 and comprises a voltage setting means 21, a computer 22, an operative waveform corection memory 23, an analogue-to-digital (A - D) converter circuit 24 and an amplifier circuit 25.

The operative waveform correction memory 23 is adpated to store waveform correction data for correcting the applied voltages in order to correct for any hysteresis of the electrostrictive elements 3 and 5 and an operative linearity attained by the strain variation magnifying portion 15.

Accordingly, the waveform E3a - E3d, E5a - E5d of the voltages applied to the electrostrictive elements 3a - 3d, 5a - 5d respectively become the corrected sinusoidal waveforms shown in Figures 4 and 5, and the central connecting portion 14 driven through the strain variation magnifying portion 15 performs a smooth planetary movement.

As shown in Figure 1, the cylindrical member 7 is fixedly supported at its opposite ends by the central connecting portions 14, 14 of the planetary driving unit 4 and the precessional driving unit 6, and the contact ring 10 is supported in the region of the planetary driving unit 4 by the bearing 8 held in the cylindrical member 7.

When the electrostrictive elements 3a - 3d of the planetary driving unit 4 are supplied with the respective applied voltages E3a - E3d as shown in Figure 4 and the electrostrictive elements 5a - 5d of the precessional driving unit 6 are also supplied with the respective applied voltages E5a - E5d as shown in Figure 5, the interior surface 10a of the contact ring 10 is pressed onto the output shaft 12 by the planetary operation of the planetary driving unit 4 so that the contact point P therebetween revolves in the clockwise direction (the direction of arrow D in Figure 2) and the end of the cylindrical member 7 attached to the precessional driving unit 6 performs planetary movement in the clockwise direction (the direction of arrow E in Figure 3) by the planetary operation of the precessional driving unit 6. Thereupon, since the phase of the voltage applied to the precessional driving unit 6 (shown in Figure 5) is advanced by $\pi/2$ relative to that of the voltage applied to the planetary driving unit 4 (shown in Figure 4), the planetary operation of the precessional driving unit 6 drives the cylindrical member 7 to perform the precessional movement at a precessional angle $\theta$ and thus to thrust the output shaft at the contact point P in the direction of arrow G.

The planetary movement and the precessional movement will be described further hereinafter.

Figure 6 is an explanatory view of the operational principle of the present invention, Figure 7 (a) is a side view in Figure 6 and Figure 7 (b) is a plan view in Figure 6.

At one end of the cylindrical member 7 there is provided the contact ring 10, which is driven to perform planetary movement by the planetary driving unit 4 and the contact point of which is moved to vary its position periodically relative to the output shaft. In Figures 6 and 7 the contact ring 10 is shown in a simplified form to facilitate the explanation. At the other end of the cylindrical member 7 there is provided the precessional driving unit 6 described above. The said other end of member 7 moves with a phase advanced by $\pi/2$ relative to the said one end of the member 7 so that the proximate point of the other end varies periodically without contacting the output shaft 12.

Hence, the cylindrical member 7 performs a precessional movement relative to the output shaft 12. The cylindrical member 7 contacts the output shaft 12 at the point P through the contact ring 10, and the contact point P moves with time, so that the gap Q changes into the contact point C after a lapse of time corresponding to $\pi/2$.

On the other hand, the gap T shows the place where the cylindrical member 7 is most proximate to the output shaft 12 and moves with time, so that the gap U changes into the smallest gap T after a lapse of time corresponding to $\pi/2$. Since the contact point P, the gap Q and the gaps T and U move as described above, the cylindrical member 7 operates to thrust the output shaft 12 in the direction of arrow G at the contact point C. Between the contact ring 10 and the output shaft 12 there is provided a non-skid means which prevents them from slipping axially.

As shown in Figure 7, since one end of the cylindrical member 7 contacts the output shaft 12 at the point P through the contact ring 10 and the precessional movement thereof is always advanced by $\pi/2$ relative to the other end thereof, the cylindrical member 7 always keep the precessional angle Q at the contact point P of the contact ring 10 relative to the output shaft 12. And the contact point P describes a path j as it revolves around the output shaft 12 while always keeping the angle $\theta$. That is, the contact point P of the contact ring 10 provided in the interior of the cylindrical member 7 performs a spiral movement having the angle $\theta$ relative to the periphery i of the cross-section of the output shaft 12 at the contact point P.

Thereupon, the contact ring 10 and the output shaft 12 performs a relative revolution owing to the circumferential difference 2 (R - r) between the interior circumference 2 R of the interior of the contact ring 10 (assuming R is the radius of the interior circumferential circle) and the exterior circumference 2 r of the output shaft 12 (assuming r is the radius of the shaft). By means of the construction as above-described, the output of the actuator 1 is delivered through the reciprocally supported output shaft 12.

The speed of movement of the output shaft 12 is adjusted as occasion demands by changing the voltages E3a - E3d applied to the planetary driving unit 4 and the voltages E5a - E5d applied to the precessional driving unit 6 and by changing the phase difference between the applied voltages so as to adjust the precessional angle $\theta$.

It is not always necessary to form the strain variation magnifying means 15 integrally. These can also be constructed by connecting a casing body 2 to a central connecting portion 14 through a strain variation magnifying portion 15.

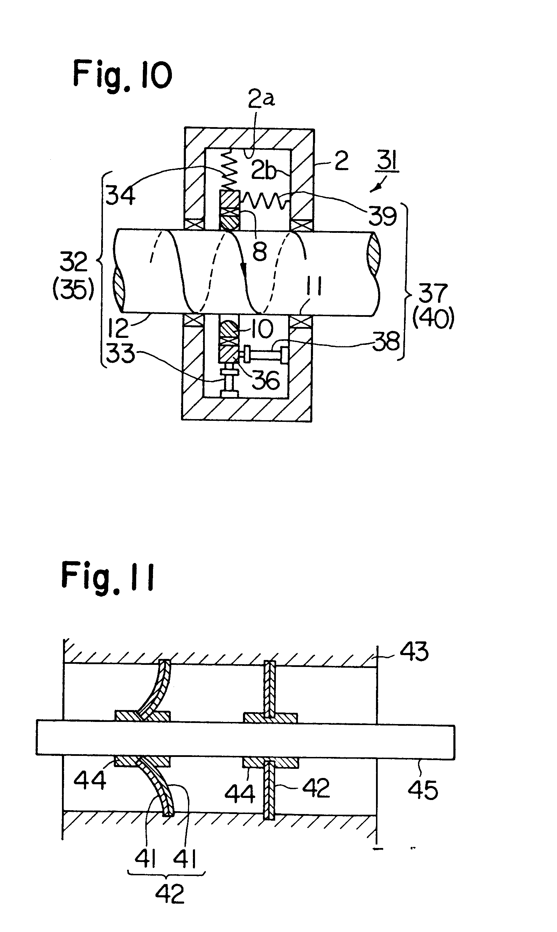

Figure 10 is a longitudinal sectional side view showing another embodiment of the linear actuator according to the present invention. In Figure 10 the parts common to those of the first embodiment are indicated by the same reference symbols as in Figure 1.

In Figure 10 a linear actuator 31 comprises a planetary driving unit 32 having two sets of force back means 35 each comprising a pair of electrostrictive elements 33 disposed oppositely so as to be directed toward the output shaft 12 and a return spring 34. These force back means are fixed respectively to the interior surface 2a of the casing body 2 and are adapted to support an outer ring 36 transversely by the outer periphery thereof. The contact ring 10 is fitted within the outer ring 36 with the interposition of the bearing 8.

A precessional driving unit 37 includes two sets of precessional means 40 comprising a pair of electrostrictive elements 38 disposed symmetrically relative to the output shaft 12 and a support spring 39. These precessional means 40 are fixed between the interior of one side wall 2b of the casing body 2 and the side surface of the outer ring 36 in the relations corresponding to the force back means 35 of the precessional driving unit 32.

That is, in the present embodiment the electrostrictive elements 3a, 3b and 5a, 5b in the first embodiment are replaced respectively by the return spring 34, 34 and the support spring 39, 39 so as to function the same as the first embodiment. That is, the contact ring 10 rolls around the periphery of the output shaft 12 whilst being pressed onto the shaft 12 by the planetary driving unit 32 as well as performing the precessional movement at a predetermined precessional angle $\theta$ as a result of being driven by the precessional driving unit 37.

By means of both movements, the contact ring 10 performs a relative movement in which it describes a spiral path around the periphery of the output shaft 12.

The features disclosed in the foregoing description, in the following claims and/or in the accompanying drawings, may both separately and in any combination thereof, be material for realising the invention in diverse forms thereof.

## Claims

1. A linear actuator (1,31) comprising a shaft and a casing body (2), characterized by a planetary driving unit (4,32) adapted to be driven by a plurality of electrostrictive elements (3a - 3d, in the casing body (2), a precessional driving unit (6,37) adapted to be driven by a plurality of electrostrictive elements (5a - 5d, 38) therein, a contact ring (10) connected interlockingly to both the planetary driving unit (4,32) and the precessional driving unit (6,37) therein and the shaft (12) loosely engaged with the interior surface (10a) of the contact ring (10) and supported for reciprocating movement by the casing body (2), in which actuator the voltages applied to the electrostrictive elements (3a - 3d, 5a - 5d, 33, 38) are controlled so that the contact ring (10) is driven to perform a planetary movement whilst being driven into contact with the shaft (12) by the planetary driving unit (4,32) and is driven to perform a precessional movement by the precessional driving unit (6,37), so that the contact point (P) between the interior surface (10a) of the contact ring (10) and the shaft (12) performs a relative movement describing a spiral path owing to the planetary movement and the precessional movement of the contact ring(10),

2. A linear actuator (1) according to claim 1, wherein the planetary driving unit (4) and the precessional driving unit (6) each comprise central connecting portions (14) fixedly fitted around a cylindrical member (7) in which the contact ring (10) is fitted, peripheral attaching portions (13) fixed to the casing body (2) and plural pairs of strain variation magnifying means (15a - 15d) connected to both the central connecting portions (14) and the peripheral attaching portions (13) and arranged in the direction toward the shaft (12) to magnify the strain variations of the electrostrictive elements (3a - 3d, 5a - 5d) and drive the contact ring (10) to perform a planetary movement.

3. A linear actuator (1) according to claim 2, wherein the contact ring (10) is fixedly supported within one end of the cylindrical member (7) which has one end thereof supported by the planetary driving unit (4) and the other end thereof supported by the precessional driving unit (6).

4. A linear actuator (1) according to claim 2 or 3, wherein the planetary driving unit (4) and the precessional driving unit (6) are each formed integrally from an elastic plate.

5. A linear actuator (1,31) according to any preceding claim, wherein the contact ring (10) is driven at an uniform speed by a voltage applying means which applies an operative waveform correcting voltage to the electrostrictive element (3a - 3d, 5a - 5d, 33, 38).

## Revendications

1. Actionneur linéaire (1; 31) comprenant un arbre (12) et un corps formant boîtier (2), caractérisé en ce qu'il comprend une unité d'entraînement planétaire (4; 32) adaptée pour être entraînée par une pluralité d'éléments électrostrictifs (3a-3d) dans le corps formant boîtier (2), une unité d'entraînement de précession (6; 37) adaptée pour être entraînée par une pluralité d'éléments électrostrictifs (5a-5d; 38), un anneau de contact (10) relié avec entraînement tant à l'unité d'entraînement planétaire (4; 32) qu'à l'unité d'entraînement de précession (6; 37) dans celui-ci, l'arbre 12 étant engagé librement avec la surface intérieure (10a) de l'anneau de contact (10) et porté pour permettre un mouvement de va-et-vient par le corps formant boîtier (2), et en ce que les tensions d'actionnement appliquées aux éléments électrostrictifs (3a-3d, 5a-5d; 33, 38) sont commandées de telle manière que l'anneau de contact (10) soit entraîné pour effectuer un mouvement planétaire tout en étant mis en contact avec l'arbre (12) par l'unité d'entraînement planétaire (4; 32) et est entraîné pour effectuer un mouvement de précession par l'unité d'entraînement de précession (6; 37) de telle manière que le point de contact (P) entre la surface intérieure (10a) de l'anneau de contact (10) et l'arbre (12) effectue un mouvement relatif décrivant une spirale résultant du mouvement planétaire et du mouvement de précession de l'anneau de contact (10).

2. Actionneur linéaire selon la revendication 1, caractérisé en ce que l'unité d'entraînement planétaire (4) et l'unité d'entraînement de rpécession (6) comprennent chacune des parties centrales de liaison (14) montées de manière fixe autour d'un organe cylindrique (7) dans lequel l'anneau de contact (10) est monté, des parties périphériques de fixation (13) fixées au corps formant boîtier (2), et plusieurs paires de moyens amplificateurs de variation de déformation (15a-15d) reliées tant aux parties centrales de liaison (14) qu'aux parties périphériques de fixation (13) et disposées dans la direction allant vers l'arbre (12) pour amplifier les variations de déformation des éléments électrostrictifs (3a-3d, 5a-5d) et entraîner l'anneau de contact (10) pour qu'il effectue un mouvement planétaire.

3. Actionneur linéaire selon la revendication 2, caractérisé en ce que l'anneau de contact (10) est porté de manière fixe à l'intérieur d'une extrémité de l'organe cylindrique (7) qui a une de ses extrémités portée par l'unité d'entraînement planétaire (4) et son autre extrémité portée par l'unité d'entraînement de précession (6).

4. Actionneur linéaire selon la revendication 2 ou 3, caractérisé en ce que l'unité d'entraînement planétaire (4) et l'unité d'entraînement de précession (6) sont chacune formées de manière intégrale d'une plaque élastique.

5. Actionneur linéaire selon l'une des revendications précédentes, caractérisé en ce que l'anneau de contact (10) est entraîné à une vitesse uniforme par des moyens applicateurs de tension qui appliquent une tension de correction de forme d'onde de fonctionnement aux éléments électrostrictifs (3a-3d, 5a-5d; 33, 38).

**Patentansprüche**

1. Linearantrieb (1, 31) mit einer Welle und einem Gehäusekörper (2), gekennzeichnet durch eine Planetenantriebseinheit (4, 32), die zum Antrieb durch eine Mehrzahl von Elektrostriktions-Elementen (3a - 3d) in dem Gehäusekörper (2) eingerichtet ist, eine Schrittantriebseinheit (6, 37), die zum Antrieb durch eine Mehrzahl von Elektrostriktions-Elementen (5a - 5d, 38) in diesem eingerichtet ist, einen Kontaktring (10), der verriegelnd sowohl mit der Planetenantriebseinheit (4, 32) als auch der Schrittantriebseinheit (6, 37) in diesem verbunden ist, wobei die Welle (12) locker mit der Innenfläche (10a) des Kontaktrings (10) gekoppelt ist und für eine Hin- und Herbewegung durch den Gehäusekörper (2) gestützt ist, wobei die auf die Elektrostriktions-Elemente (3a - 3d, 5a - 5d, 33, 38) aufgebrachten Spannungen derart gesteuert sind, daß der Kontaktring (10) zur Ausführung einer Planetenbewegung angetrieben wird, während er in Berührung mit der Welle (12) durch die Planetenantriebseinheit (4, 32) angetrieben wird zur Durchführung einer Schrittbewegung durch die Schrittantriebseinheit (6, 37), so daß der Kontaktpunkt (P) zwischen der Innenfläche (10a) des Kontaktrings (10) und der Welle (12) eine Relativbewegung ausführt, die aufgrund der Planetenbewegung und der Schrittbewegung des Kontaktrings (10) einen spiraligen Weg beschreibt.

2. Linearantrieb (1) nach Anspruch 1, wobei die Planetenantriebseinheit (4) und die Schrittantriebseinheit (6) jeweils zentrale Verbindungsabschnitte (14) die fest um ein zylindrisches Element (7) angeordnet sind, in das der Kontaktring (10) eingesetzt ist, periphere Anbringungsabschnitte (13), die an dem Gehäusekörper (2) befestigt sind, und eine Mehrzahl von Paaren von Druckänderungsvergrößerungsmitteln (15a - 15d), die sowohl mit den zentralen Verbindungsabschnitten (14) und den peripheren Anbringungsabschnitten (13) verbunden sind und in einer Richtung auf die Welle (12) angeordnet sind, um die Druckänderungen der Elektrostriktions-Elemente (3a - 3d, 5a - 5d) zu vergrößern und den Kontaktring (10) zur Durchführung einer Planetenbewegung anzutreiben, aufweisen.

3. Linearantrieb (1) nach Anspruch 2, wobei der Kontaktring (10) fest in dem einen Ende des zylindrischen Elementes (7) gestützt ist, dessen eines Ende durch die Planetenantriebseinheit (4) gestützt ist und dessen anderes Ende durch die Schrittantriebseinheit (7) gestützt ist.

4. Linearantrieb (1) nach Anspruch 2 oder 3, wobei die Planetenantriebseinheit (4) und die Schrittantriebseinheit (6) jeweils einstückig aus einer elastischen Platte gebildet sind.

5. Linearantrieb (1, 31) nach einem der vorangehenden Ansprüche, wobei der Kontaktring (10) mit einer gleichmäßigen Geschwindigkeit angetrieben wird durch ein Spannungsaufbringungsmittel, daß eine die Wellenform korrigierende wirksame Spannung auf die Elektrostriktions-Elemente (3a - 3d, 5a - 5d, 33, 38) aufbringt.

EP 0 234 274 B1

Fig. 1

Fig. 2

Fig. 3

Fig. 4

Fig. 5

Fig. 6

## Fig.7 (a)

## Fig.7 (b)

## Fig.8

## Fig.9

**Fig. 10**

**Fig. 11**